# EUROPEAN PATENT SPECIFICATION

(11) **EP 2 660 192 B1**
(45) Date of publication and mention of the grant of the patent: **20.12.2017**
(21) Application number: 10861263.1
(22) Date of filing: 30.12.2010
(51) Int. Cl.: C01B 32/05, C01B 32/20, H01G 11/36

(54) **GRAPHENE DERIVATIVE-CARBON NANOTUBE COMPOSITE MATERIAL AND PREPARATION METHOD THEREOF**
GRAPHENDERIVAT-KOHLENSTOFFNANORÖHRCHEN ENTHALTENDES VERBUNDMATERIAL UND VERFAHREN ZU DESSEN HERSTELLUNG
MATÉRIAU COMPOSITE DERIVÉ DE GRAPHÈNE-NANOTUBES DE CARBONE ET SON PROCÉDÉ DE PRÉPARATION

(43) Date of publication of application: 06.11.2013
(73) Proprietor: Ocean's King Lighting Science&Technology Co., Ltd., Shenzhen, Guangdong 518054 (CN)
(72) Inventor: ZHOU, Mingjie, Shenzhen Guangdong 518054 (CN); WU, Feng, Shenzhen Guangdong 518054 (CN); WANG, Yaobing, Shenzhen Guangdong 518054 (CN)
(74) Representative: Michalski Hüttermann & Partner Patentanwälte mbB
(86) International application number: PCT/CN2010/080531
(87) International publication number: WO 2012/088697

(56) References cited:
- CN-A- 101 575 095
- CN-A- 101 712 452
- CN-A- 101 734 650
- CN-A- 101 811 690
- US-A1- 2007 284 557
- US-A1- 2008 206 124
- DATABASE WPI Week 201050 2010 Thomson Scientific, London, GB; AN 2010-J06705 XP002763224, & CN 101 734 650 A (UNIV SHENYANG ARCHITECTURAL) 16 June 2010 (2010-06-16)
- DINGSHAN YU ET AL: "Self-Assembled Graphene/Carbon Nanotube Hybrid Films for Supercapacitors", THE JOURNAL OF PHYSICAL CHEMISTRY LETTERS, vol. 1, no. 2, 21 January 2010 (2010-01-21), pages 467-470, XP055047519, ISSN: 1948-7185, DOI: 10.1021/jz9003137

## Description

### FIELD OF THE INVENTION

The present invention relates to a field of nano-carbon composite material, and more particularly relates to a graphene derivative-carbon nanotube composite material and a preparation method thereof.

### BACKGROUND OF THE INVENTION

A graphene material was prepared by Andre K. Geim, et al at the university of Manchester in England in 2004, the graphene material was received a widespread attention because of its unique structure and optoelectronic properties. Monolayer graphite is considered to be an ideal material due to its large specific surface area, excellent electrical conductivity, excellent thermal conductivity and low thermal expansion coefficient. For example, it has: 1, a high-strength, Young's modulus (1,100 GPa), breaking strength (125GPa); 2, a high thermal conductivity, (5,000W/mK); 3, a high conductivity, and carrier transport rate, (200,000 cm²/V*s); 4, a high specific surface area, (theoretical calculated value: 2,630m²/g). It can be used as an electrode material in the super-capacitor and the lithium ion battery especially for its high electrical conductivity properties, the large specific surface and a single molecular layer of the two-dimensional nano-scale structures.

CN 101734650 A refers to a preperation method of a graphene-carbon nanotube composite material.

US 2007/284557 A1 refers to a transparent and conductive film comprising at least one network of graphene flakes is described herein. This film may further comprise an interpenetrating network of other nanostructures, a polymer and/or a functionalization agent(s). A method of fabricating the above device is also described, and may comprise depositing graphene flakes in solution and evaporating solvent therefrom.

Carbon nanotube was found in the carbon fibers produced by the arc discharge method in the 1991. (S. Iijima, Nature, 354, 56 (1991)). Carbon nanotube is a type of tubular carbon molecule, each carbon atom in the tube is taken Sp² hybridized and connected by carbon to carbon bond, the hexagonal honeycomb structure is formed as a skeleton of the carbon nanotube; the length-to-diameter ratio of carbon nanotube is above 1000:1, the intensity ratio is more than 100 times greater than the steel in the same volume , but the weight is 1/6 to 1/7 of the latter one; the hardness is equal to the diamond, but it has a good flexibility, it is an ideal fiber material with a high strength, and so it is called a "super fiber".

In the field of nano carbon composite structures, most researches have been focusing on the combination of metal particles, organic molecule with the carbon nanotube or graphene. It is equivalent to a research of the doping of one-dimensional and zero-dimensional carbon material. The complex of the carbon-based material is mainly concentrated in the process of growing the carbon nanotube, while other carbon allotropes are produced. The widely research includes a zero-dimensional and one-dimensional composite structure--Nano peapods found in 1998, (Smith, g.W. et al. Nature396, 323 (1998)). Fujitsu Laboratories published the success of synthesizing a new nano carbon composite structure formed by self-organizing of carbon nanotube and graphene nano-carbon in the 34th Fullerene Nanotubes General Symposiun in March 2008. Fujitsu Laboratories used chemical vapor deposition method to form a composite structure the composite structure was formed by self-organization of several to dozens of layers of graphite, which was generated in order on the backplane perpendicular direction of multi-walled carbon nanotube at a temperature of 510°C. It was the first time to implement vertical engaging of non-atomic structure of the bonded structure of the one-dimensional structure of the carbon nanotubes and a two-dimensional structure of the graphene.

However, the conductive properties of the conventional composite material of graphene - carbon nanotube still need to be further improved.

### SUMMARY OF THE INVENTION

According to the above problems, one object of the present invention is to provide a graphene derivative-carbon nanotube composite material and a preparation method thereof.

A graphene derivative-carbon nanotube composite material, containing a graphene derivative and a carbon nanotube with a mass ratio of 1∼5:1, the graphene derivative and the carbon nanotube in the graphene derivative-carbon nanotube composite material interpenetrate and intertwine to each other to form a connected network structure, wherein the graphene derivative is a fluorinated graphene oxide or nitrogen-doped graphene oxide.

In a preferred embodiment, the carbon nanotube is a hollow tubular carbon material having a diameter of 5nm to 200nm and a length of 0.1µm to 100µm.

A preparation method of a graphene derivative-carbon nanotube composite material includes the following steps:
step one, adding a graphene derivative and a carbon nanotube, wherein the graphene derivative is a fluorinated graphene oxide or nitrogen-doped graphene oxide, to an alcohol dispersant and ultrasonic dispersing for 120 minutes to 150 minutes to obtain a stable suspension; and
step two, filtrating the suspension to obtain a solid, drying and cooling the solid to a room temperature to obtain the graphene derivative-carbon nanotube composite material.

In a preferred embodiment, a mass ratio of the graphene derivative and the carbon nanotube in the step one is 1∼5:1.

In a preferred embodiment, the alcohol dispersant in the step one is selected from the group consisting of ethanol, ethylene glycol and isopropanol.

In a preferred embodiment, a drying temperature in the step two is 50°C to 80°C, and a drying time in the step two is 48 hours to 56 hours.

In a preferred embodiment, the fluorinated graphene oxide is prepared by the following method:
preparing graphene oxide by using graphite; and
performing a reaction between the graphene oxide and a mixed gas containing N₂ and F₂ for 0.5 hour to 24 hours at a temperature from 20°C to 200°C, and obtaining the fluorinated graphene oxide.

In a preferred embodiment, the nitrogen- doped graphene oxide is prepared by the following method:
preparing graphene oxide by using graphite; and
heating the graphene oxide under the atmosphere of ammonia, at a temperature from 500°C to 800°C with a rate of 10°C/min, then heat preserving for 2 hours, cooling to a room temperature to obtain the nitrogen-doped graphene oxide.

In the composite material, the graphene derivative and carbon nanotube composite form an intermixing and interveining structure to prevent the aggregation and stacking of the graphene derivative, so as to enable complementarities in structure and function of the graphene derivative and carbon nanotubes and improve the conductive property of the composite material.

### BRIEF DESCRIPTION OF THE DRAWINGS

The preferred embodiments of the present invention are described more specifically by the drawings, the objects, features and advantages of the present invention and others will become much clear. The same figures indicate the same portions in all the drawings. The drawing do not draw scaling in proportion to the actual size deliberately, it is focused on showing the gist of the present invention.
FIG. 1 is a flowchart of preparation method of the graphene derivative-carbon nanotube composite material according to one embodiment of the present invention;
FIG. 2 shows a scanning electron microsope image of the carbon nanotube according to one embodiment of the present invention;
FIG. 3 shows a scanning electron microsope image of the fluorinated graphene oxide according to one embodiment of the present invention;
FIG. 4 shows a scanning electron microsope image of the fluorinated graphene oxide -carbon nanotube composite material according to one embodiment of the present invention;
FIG. 5 shows a scanning electron microsope image of the nitrogen-doped graphene oxide according to one embodiment of the present invention;
FIG. 6 shows a scanning electron microsope image of the nitrogen-doped graphene oxide-carbon nanotube composite material according to one embodiment of the present invention.

### DETAILED DESCRIPTION OF THE EMBODIMENTS

For a better understanding of the objects, features and advantages of the present invention, the following examples and drawings are provided to further illustrate the technical solutions of the present invention. Numerous specific details are described in the following description in order to fully understand the present invention. A lot different ways can also implement besides the describing in the present invention, and the scope of the present invention is not limited to the following examples.

A graphene derivative-carbon nanotube composite material includes a graphene derivative and a carbon nanotube with a mass ratio of 1∼5:1, the graphene derivative and the carbon nanotube in the graphene derivative-carbon nanotube composite material interpenetrate and intertwine to each other to form a connected network structure.

The two-dimensional structure of the single molecular layer of the graphene derivative may easily be agglomerated, laminated, curled or highly wrinkled in the drying process for removing the interlayer water, which may lead to a great reduction of the utilization rate of the specific surface area. Since there are many similarities in structure and performance of carbon nanotube and graphene derivative, the carbon nanotube can be inserted to layers of the graphene derivative, or the functional groups on the carbon nanotube and the graphene derivative can react with each other, such that the carbon nanotube is grafted in the surface of the graphene derivative, and layers of the graphene are separated from each other, the specific surface area of the graphene derivative after drying is improved, the agglomeration and lamination of the graphene derivative is avoided, thereby the specific capacitance of supercapacitor is increased.

The graphene derivative may be fluorinated graphene oxide or nitrogen-doped graphene oxide. The carbon nanotube may be a hollow tubular carbon material having a diameter of 5nm to 200nm and a length of 0.1µm to 100µm. As the electrode material, the discharge capacity of the fluorinated graphite oxide is greatly improved comparing to the graphite oxide. The discharge capacity is 675mAh/g and the energy density is 1420Wh/Kg when the discharge current density is 0.5mA/cm² (1M LiClO₄-PC). N-doped graphene oxide is generated when the graphene oxide is doped by nitrogen, not only its stability can be improved, but also the conductivity performance can be enhanced, and a clear biological n-type effect is appeared.

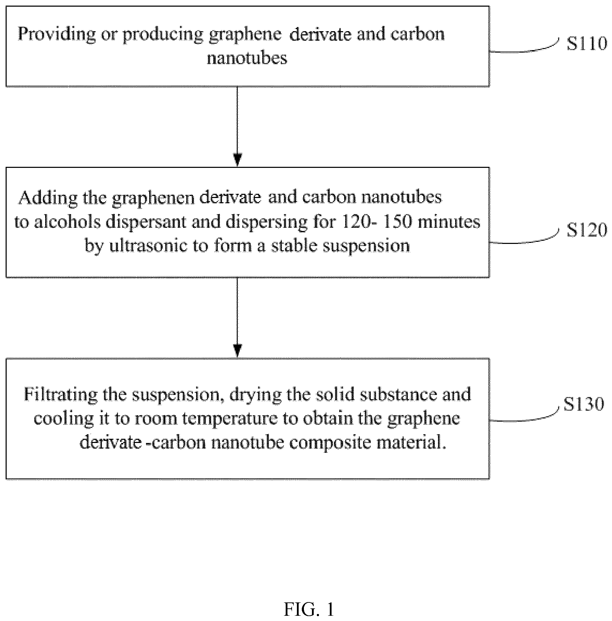

Referring to FIG. 1, a preparation method of the graphene derivative-carbon nanotube composite material includes the following steps:
Step S110, the graphene derivative and carbon nanotube are provided or prepared.

The graphene derivative may be fluorinated graphene oxide or nitrogen-doped graphene oxide.

The fluorinated graphene oxide may be prepared by the conventional methods. Preferably, it may be prepared by the following method:
Step S111, a graphene oxide is prepared by using graphite.
   (a), graphite, potassium persulfate, and phosphorus pentoxide are added to concentrated sulfuric acid at a temperature of 80°C to 120°C with a mass ratio of 2∼10:1:1, the mixture is naturally cooled after uniformly stirred, then the mixture is washed to neutral and dried to obtain a mixture. The graphite is preferable flake graphite.
   (b), The mixture and a potassium permanganate are added to concentrated sulfuric acid, the temperature of the mixed solution is maintained at a temperature from 15°C to 20°C, and then maintained for 1 hours to 3 hours in the oil bath at a temperature from 25°C to 35°C, the deionized water and the hydrogen peroxide solution are added to have a reaction, filtrated, a solid was collected.
   (c), the solid is washed by diluted hydrochloric acid, and dried to obtain the graphene oxide.
   (d), the graphene oxide is added to the deionized water and ultrasound vibrated for 1 hour to obtain a uniform dispersion of graphene oxide colloidal solution, then the graphene oxide colloidal solution is filtered and a solid is collected , then the solid is vacuum dried to obtain the graphene oxide.
Step S112, the graphene oxide and a mixed gas containing N₂ and F₂ are reacted for 0.5 hour to 24 hours at a temperature from 20°C to 200°C, the fluorinated graphene oxide is obtained.

Preferably, the graphene oxide obtained from the S111 is placed in the reactor, the mixed gas containing N₂ and F₂ is introduced (a volume fraction of F₂ is 5% to 30%), the mixture is heated and the temperature is maintained at a temperature from 20°C to 200°C, the reaction is lasted for 0.5 hour to 24 hours, such that the graphene oxide and F₂ are reacted, F is partially substituted by O, the fluorinated graphene oxide is obtained.

In a more preferred embodiment, the volume fraction of F₂ in the mixed gas is 10%, the reaction temperature is 100°C, the reaction time is 1 hour.

The nitrogen-doped graphene oxide may be prepared by the conventional methods. Preferably, itmay be prepared by the following method:
Step S111, a graphene oxide is prepared by using graphite.

The process of the step is substantially the same as step S111.

Step S112', the graphene oxide obtained from the step S111' is placed under the atmosphere of ammonia, the graphene oxide is heated to a temperature from 500°C to 800°C with a rate of 10°C/min, heat preserved for 2 hours, the reaction product is cooled to a room temperature to obtain the nitrogen-doped graphene oxide.

Preferably, the sample of the graphene oxide is placed in a heating furnace and a high-purity ammonia is introduced, the flow rate of ammonia is controlled at a rate of 80mL/min, and the time for introducing ammonia is 5 minutes to 10 minutes to replace the air in the tube furnace, and then the furnace is heated to the reaction temperature from 500°C to 800°C with a rate of 10°C/min, the temperature is maintained for 2 hours. After the reaction is ended, the reaction product was cooled under an ammonia atmosphere to a room temperature to obtain the nitrogen-doped graphene oxide.

The carbon nanotube may be prepared by the traditional methods. Preferably, the carbon nanotube is a hollow tubular carbon material having a diameter of 5nm to 200nm and a length of 0.1µm to 100µm.

Step S120, the graphene derivative obtained and a carbon nanotube from the step S110 are added to an alcohol dispersant and ultrasonic dispersed to obtain a stable suspension.

Preferably, the graphene derivative and the carbon nanotube are added to alcohol dispersant with a mass ratio of 1∼5:1, and ultrasonic dispersed for 120 minutes to 150 minutes to obtain a stable suspension.

The alcohol dispersant is preferable selected from the group consisting of ethanol, ethylene glycol and isopropanol.

Step S130, the suspension is filtrated to obtain a solid, the solid is dried and cooled to a room temperature to obtain the graphene derivative-carbon nanotube composite material.

Preferably, the solid is vacuum dried for 48 hours to 56 hours at a temperature from 50°C to 80°C, then cooled to a room temperature to obtain the graphene derivative-carbon nanotube composite material.

The preparation method has the following advantages:
(1) The graphene oxide doped with fluorine or nitrogen is simply prepared with the graphene oxide, which improves the stability of the graphene oxide.
(2) The oxygen atom is substituted; the capacity of the electrode material can be significantly improved by doping with fluorine or nitrogen. The charge specific capacity of super-capacitor prepared of the graphene derivative-carbon nanotube composite material is 99F/g∼112F/g, the discharge specific capacity is 96F/g∼110F/g, the charge- discharge efficiency is 97%∼99.5%.
(3) In the composite material, the graphene derivative and carbon nanotube composite form an intermixing and interveining structure to avoid the aggregation and stacking of the graphene derivative, so as to enable complementarities in structure and function of the graphene derivative and carbon nanotubes and improve the conductive property of the composite material.

The following examples are provided for further illustration. All the reagents are of analytical grade.

EXAMPLE 1
(1) A natural flake graphite having a purity of 99.5% was provided.
(2) The graphite oxide was prepared according to the modified Hummers method. The specific steps were: 20g 50 mesh of graphite powder, 10g of potassium persulfate and 10g of phosphorus pentoxide were added to concentrated sulfuric acid at a temperature of 80°C, and the mixture was stirred uniformly, cooled for more than 6 hours, washed to neutral and dried to obtain a sample. The dried sample was added to 230mL of concentrated sulfuric acid at a temperature of 0°C, then 60g of potassium permanganate was added, the temperature of the mixture was maintained for 30 minutes below 20°C, and then maintained in the oil bath at a temperature of 35°C for 2 hours, 920mL of deionized water was slowly added. 15 minutes later, 2.8L of deionized water (containing 50mL of hydrogen peroxide with a concentration of 30%) was then added, the mixture was hot filtrated while the color of the mixture became bright yellow, and then washed with 5L of hydrochloric acid with a concentration of 10%, filtrated, and vacuum dried for 48 hours at a temperature of 60°C to obtain the graphite oxide.
(3) 20 g of graphite oxide and 200 mL of deionized water were added to a beaker to form a mixture, the mixture was ultrasonic dispersed for 1 hour, a claybank homogeneous transparent solution was obtained, and a colloidal solution with uniformly dispersed graphene oxide was formed, filtrated, and vacuum dried for 48 hours at a temperature of 60°C to obtain the graphene oxide.
(4) The dried graphene oxide was loaded into a reactor, and a dry nitrogen was introduced for 4 hours, and then the fluorine was introduced to react with the graphene oxide for 1 hour at a temperature of 100°C to obtain the fluorinated graphene oxide. The volume fraction of the fluorine in the mixed gas was 10%.
(5) 100mg of the fluorinated graphene oxide and 100mg of the carbon nanotube were added to 500 mL of ethanol to form a mixture, a diameter of the carbon nanotube was 5 nm, a length of the carbon nanotube was 0.1 µm, the mixture was ultrasonic dispersed for 120 minutes such that both the fluorinated graphene oxide and the carbon nanotube were uniformly dispersed, and a stable suspension was obtained. The suspension was filtered, and vacuum dried for 48 hours at a temperature of 50°C, the fluorinated graphene oxide - carbon nanotube composites material was obtained.

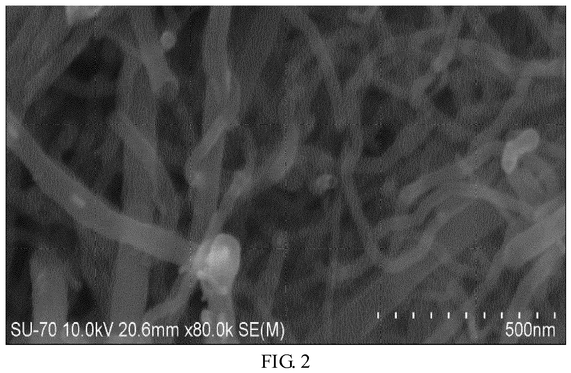

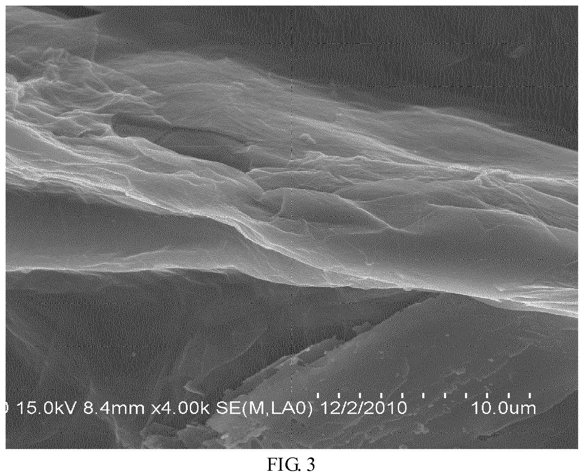

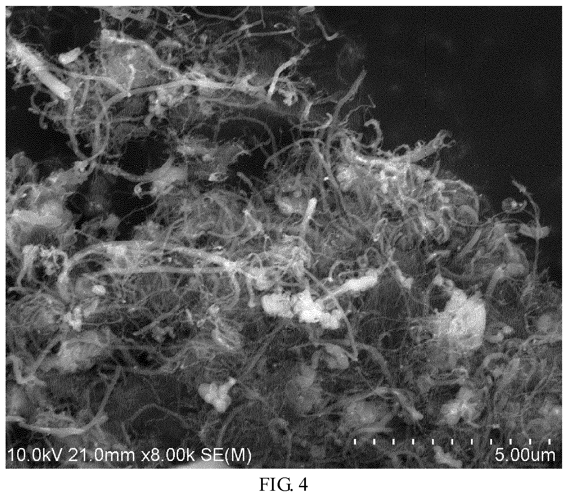

Referring to FIG. 2, FIG. 2 shown a scanning electron microsope (SEM) image of the carbon nanotube of example 1. Referring to FIG. 3, FIG. 3 shown a scanning electron microsope (SEM) image of the fluorinated graphene oxide of example 1. Referring to FIG. 4, FIG. 4 shown a scanning electron microsope (SEM) image of the fluorinated graphene oxide -carbon nanotube composite material of example 1. It may be seen from FIG 2 to FIG 4 that, there was a phenomenon of agglomeration in a single carbon nanotube or a single fluorinated graphene oxide, while the fluorinated graphene oxide was isolated uniformly by the carbon nanotube in the fluorinated graphene oxide -carbon nanotube composite material, the phenomenon of laminate or agglomeration did not occur.

### EXAMPLE 2

(1) A natural flake graphite having a purity of 99.5% was provided.
(2) The graphite oxide was prepared according to the modified Hummers method. The specific steps were: 20g 50 mesh of graphite powder, 10g of potassium persulfate and 10g of phosphorus pentoxide were added to concentrated sulfuric acid at a temperature of 80°C, and the mixture was stirred uniformly, cooled for more than 6 hours, washed to neutral and dried to obtain a sample. The dried sample was added to 230mL of concentrated sulfuric acid at a temperature of 0°C, then 60g of potassium permanganate was added, the temperature of the mixture was maintained for 30 minutes below 20°C, and then maintained in the oil bath at a temperature of 35°C for 2 hours, 920mL of deionized water was slowly added. 15 minutes later, 2.8L of deionized water (containing 50mL of hydrogen peroxide with a concentration of 30%) was then added, the mixture was hot filtrated while the color of the mixture became bright yellow, and then washed with 5L of hydrochloric acid with a concentration of 10%, filtrated, and vacuum dried for 48 hours at a temperature of 60°C to obtain the graphite oxide.
(3) 20 g of graphite oxide and 200 mL of deionized water were added to a beaker to form a mixture, the mixture was ultrasonic dispersed for 1 hour, a claybank homogeneous transparent solution was obtained, and a colloidal solution with uniformly dispersed graphene oxide was formed, filtrated, and vacuum dried for 48 hours at a temperature of 60°C to obtain the graphene oxide.
(4) The graphene oxide was loaded into a tube of furnace, and a high purity ammonia was introduced, the flow rate of ammonia was controlled by a gas-flowmeter, the flow rate of ammonia was controlled at a rate of 80mL/min, and the ammonia was introduced for 10 minutes to replace air in the tube furnace, and then the furnace was heated, the temperature was raised to a reaction temperature of 800°C at a rate of 10°C/min, maintained for 2 hours. After the reaction was ended, the reaction product was cooled to room temperature under the ammonia atmosphere, and then the nitrogen-doped graphene oxide was removed from the furnace after the reaction.
(5) 200mg of the nitrogen-doped graphene oxide and 100mg of the carbon nanotube were added to 500 mL of ethylene glycol, a diameter of the carbon nanotube was 200 nm, a length of the carbon nanotube was 100 µm, the mixture was ultrasonic dispersed for 150 minutes such that both the nitrogen-doped graphene oxide and the carbon nanotube were uniformly dispersed, and a stable suspension was obtained. The suspension was filtered, and vacuum dried for 48 hours at a temperature of 50°C, the nitrogen-doped graphene oxide - carbon nanotube composites material was obtained.

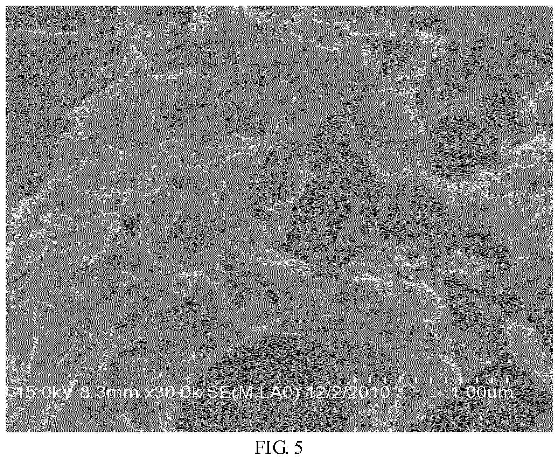

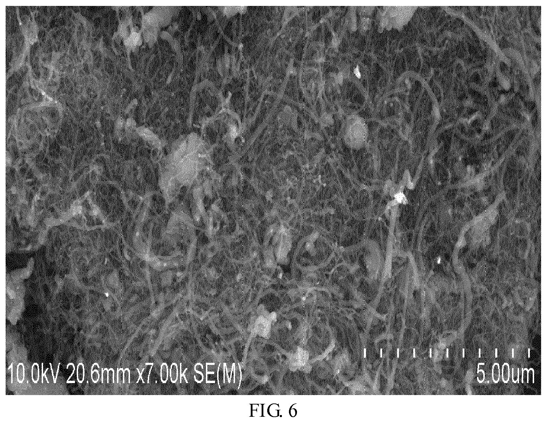

Referring to FIG. 5, FIG. 5 shown a scanning electron microsope (SEM) image of the nitrogen-doped graphene oxide of example 2. It may be seen from FIG 5 that, the nitrogen-doped graphene oxide was agglomerated and wrinkled. Referring to FIG. 6, FIG. 6 shown a scanning electron microsope (SEM) image of the nitrogen-doped graphene oxide -carbon nanotube composite material of example 2. It may be seen from FIG 6 that, the nitrogen-doped graphene oxide was isolated uniformly by the carbon nanotube in the nitrogen-doped graphene oxide -carbon nanotube composite material, the phenomenon of laminate or agglomeration did not occur.

### EXAMPLE 3

### Fluorinated graphene oxide was prepared according to the example 1;

300mg of the fluorinated graphene oxide and 100mg of the carbon nanotube were added to 500 mL of ethanol, a diameter of the carbon nanotube was 50 nm, a length of the carbon nanotube was 30 µm, the mixture was ultrasonic dispersed for 120 min such that both the fluorinated graphene oxide and the carbon nanotube were uniformly dispersed, and a stable suspension was obtained. The suspension was filtered, and vacuum dried at a temperature of 80°C for 56 hours, the graphene derivative-carbon nanotube composite material was obtained.

### EXAMPLE 4

The nitrogen-doped graphene oxide was prepared according to the example 2;
500mg of the nitrogen-doped graphene oxide and 100mg of the carbon nanotube were added to 500 mL of ethylene glycol to form a mixture, a diameter of the carbon nanotube was 100nm, a length of the carbon nanotube was 50µm, the mixture was ultrasonic dispersed for 150 minutes such that both the nitrogen-doped graphene oxide and the carbon nanotube were uniformly dispersed, and a stable suspension was obtained. The suspension was filtered, and vacuum dried at a temperature of 60°C for 50 hours, the nitrogen-doped graphene oxide - carbon nanotube composites material was obtained.

The graphene derivative - carbon nanotube composites material obtained from example 1 to 4 were used as electrode material of super-capacitor, the charge-discharge capacity and charge-discharge efficiency of the super capacitor were shown in table 1.

**Table 1 the charge-discharge specific capacity and charge-discharge efficiency of the super capacitor**

| example | charge specific capacity(F/g) | discharge specific capacity(F/g) | charge-discharge efficiency |
|---|---|---|---|
| Example 1 | 110.48 | 108.32 | 98.04% |
| Example 2 | 99.56 | 96.69 | 97.12% |
| Example 3 | 106.63 | 103.98 | 97.51% |
| Example 4 | 103.54 | 101.29 | 95.83% |

It may be seen from Table 1 that, the super-capacitor prepared of graphene derivative-carbon nanotube composite material according to the examples had a high charge and discharge specific capacity and a high charge-discharge efficiency.

It should be understood that the descriptions of the examples are specific and detailed, but those descriptions can't be used to limit the present disclosure. Therefore, the scope of protection of the invention patent should be subject to the appended claims.

## Claims

1. A graphene derivative-carbon nanotube composite material, comprising a graphene derivative and a carbon nanotube with a mass ratio of 1∼5:1, the graphene derivative and the carbon nanotube in the graphene derivative-carbon nanotube composite material interpenetrate and intertwine to each other to form a connected network structure, wherein the graphene derivative is a fluorinated graphene oxide or nitrogen-doped graphene oxide.

2. The graphene derivative-carbon nanotube composite material according to claim 1, the carbon nanotube is a hollow tubular carbon material having a diameter of 5nm to 200nm and a length of 0.1µm to 100µm.

3. A preparation method of a graphene derivative-carbon nanotube composite material, comprising the following steps:
step one, adding graphene derivative, wherein the graphene derivative in the step one is fluorinated graphene oxide or nitrogen-doped graphene oxide, and carbon nanotube to an alcohol dispersant and ultrasonic dispersing for 120 minutes to 150 minutes to obtain a stable suspension; and
step two, filtrating the suspension to obtain a solid, drying and cooling the solid to a room temperature to obtain the graphene derivative-carbon nanotube composite material.

4. The preparation method of claim 3, wherein a mass ratio of the graphene derivative and the carbon nanotube in the step one is 1∼5:1.

5. The preparation method of claim 3, wherein the alcohol dispersant in the step one is selected from the group consisting of ethanol, ethylene glycol and isopropanol.

6. The preparation method of claim 3, wherein a drying temperature in the step two is 50°C to 80°C, and a drying time in the step two is 48 hours to 56 hours.

7. The preparation method of claim 3, wherein the fluorinated graphene oxide is prepared by the following method:
preparing graphene oxide by using graphite; and
performing a reaction between the graphene oxide and a mixed gas containing N₂ and F₂ for 0.5 hour to 24 hours at a temperature from 20°C to 200°C, and obtaining the fluorinated graphene oxide.

8. The preparation method of claim 3, wherein the nitrogen-doped graphene oxide is prepared by the following method:
preparing graphene oxide by using graphite; and
heating the graphene oxide under the atmosphere of ammonia at a temperature from 500° to 800°C with a rate of 10°C/min, then heat preserving for 2 hours, cooling to a room temperature to obtain the nitrogen-doped graphene oxide.

## Patentansprüche

1. Graphenderivat-Kohlenstoffnanoröhrchen enthaltendes Verbundmaterial, umfassend ein Graphenderivat und ein Kohlenstoffnanoröhrchen mit einem Massenverhältnis von 1∼5:1, wobei das Graphenderivat und das Kohlenstoffnanoröhrchen in dem Graphenderivat-Kohlenstoffnanoröhrchen enthaltenden Verbundmaterial einander durchdringen und miteinander verschlungen sind, um eine verbundene Netzwerkstruktur zu bilden, wobei das Graphenderivat ein fluoriertes Graphenoxid oder stickstoffdotiertes Graphenoxid ist.

2. Graphenderivat-Kohlenstoffnanoröhrchen enthaltendes Verbundmaterial nach Anspruch 1, wobei das Kohlenstoffnanoröhrchen ein hohles rohrförmiges Kohlenstoffmaterial mit einem Durchmesser von 5 nm bis 200 nm und einer Länge von 0,1 µm bis 100 µm ist.

3. Herstellungsverfahren für ein Graphenderivat-Kohlenstoffnanoröhrchen enthaltendes Verbundmaterial, welches die folgenden Schritte umfasst:
Schritt eins: Zufügen von Graphenderivat, wobei das Graphenderivat in dem Schritt eins fluoriertes Graphenoxid oder stickstoffdotiertes Graphenoxid ist, und Kohlenstoffnanoröhrchen zu einem Alkoholdispergiermittel und Dispergieren mittels Ultraschall für 120 Minuten bis 150 Minuten, um eine stabile Suspension zu erhalten; und
Schritt zwei: Filtrieren der Suspension, um einen Feststoff zu erhalten, Trocknen und Kühlen des Feststoffs auf Raumtemperatur, um das Graphenderivat-Kohlenstoffnanoröhrchen enthaltende Verbundmaterial zu erhalten.

4. Herstellungsverfahren nach Anspruch 3, wobei ein Massenverhältnis des Graphenderivats und des Kohlenstoffnanoröhrchens in dem Schritt eins 1∼5:1 beträgt.

5. Herstellungsverfahren nach Anspruch 3, wobei das Alkoholdispergiermittel in dem Schritt eins ausgewählt ist aus der Gruppe bestehend aus Ethanol, Ethylenglykol und Isopropanol.

6. Herstellungsverfahren nach Anspruch 3, wobei eine Trocknungstemperatur in dem Schritt zwei 50 °C bis 80 °C beträgt und eine Trocknungszeit in dem Schritt zwei 48 Stunden bis 56 Stunden beträgt.

7. Herstellungsverfahren nach Anspruch 3, wobei das fluorierte Graphenoxid nach dem folgenden Verfahren hergestellt wird:
Herstellen von Graphenoxid unter Verwendung von Graphit; und
Durchführen einer Reaktion zwischen dem Graphenoxid und einem gemischten Gas, welches N₂ und F₂ enthält, für 0,5 Stunden bis 24 Stunden bei einer Temperatur von 20 °C bis 200 °C, und Erhalten des fluorierten Graphenoxids.

8. Herstellungsverfahren nach Anspruch 3, wobei das stickstoffdotierte Graphenoxid nach dem folgenden Verfahren hergestellt wird:
Herstellen von Graphenoxid unter Verwendung von Graphit; und
Erwärmen des Graphenoxids unter einer Ammoniakatmosphäre auf eine Temperatur von 500 ° bis 800 °C mit einer Rate von 10 °C/Minute, danach Wärmekonservieren für 2 Stunden, Abkühlen auf Raumtemperatur, um das stickstoffdotierte Graphenoxid zu erhalten.

## Revendications

1. Matériau composite dérivé de graphène-nanotube de carbone, comprenant un dérivé de graphène et un nanotube de carbone avec un rapport massique de 1∼5:1, le dérivé de graphène et le nanotube de carbone dans le matériau composite dérivé de graphène-nanotube de carbone s'interpénétrant et s'entremêlant l'un avec l'autre pour former une structure de réseau connecté, le dérivé de graphène étant un oxyde de graphène fluoré ou un oxyde de graphène dopé à l'azote.

2. Matériau composite dérivé de graphène-nanotube de carbone selon la revendication 1, le nanotube de carbone est un matériau carboné tubulaire creux ayant un diamètre de 5 nm à 200 nm et une longueur de 0,1 µm à 100 µm.

3. Procédé de préparation d'un matériau composite dérivé de graphène-nanotube de carbone, comprenant les étapes suivantes :
étape un, ajouter un dérivé de graphène, le dérivé de graphène à l'étape un étant de l'oxyde de graphène fluoré ou de l'oxyde de graphène dopé à l'azote, et un nanotube de carbone à un dispersant alcoolique et disperser aux ultrasons pendant 120 minutes à 150 minutes pour obtenir une suspension stable ; et
étape deux, filtrer la suspension pour obtenir un solide, sécher et refroidir le solide jusqu'à une température ambiante pour obtenir le matériau composite dérivé de graphène-nanotube de carbone.

4. Procédé de préparation de la revendication 3, dans lequel un rapport massique du dérivé de graphène et du nanotube de carbone à l'étape un est de 1-5:1.

5. Procédé de préparation de la revendication 3, dans lequel le dispersant alcoolique à l'étape un est choisi dans le groupe constitué par l'éthanol, l'éthylène glycol et l'isopropanol.

6. Procédé de préparation de la revendication 3, dans lequel une température de séchage à l'étape deux est de 50 °C à 80 °C, et un temps de séchage à l'étape deux est de 48 heures à 56 heures.

7. Procédé de préparation de la revendication 3, dans lequel l'oxyde de graphène fluoré est préparé par le procédé suivant :
préparer de l'oxyde de graphène en utilisant du graphite ; et
effectuer une réaction entre l'oxyde de graphène et un gaz mixte contenant du N₂ et du F₂ pendant 0,5 heure à 24 heures à une température de 20 °C à 200 °C, et obtenir l'oxyde de graphène fluoré.

8. Procédé de préparation de la revendication 3, dans lequel l'oxyde de graphène dopé à l'azote est préparé par le procédé suivant :
préparer de l'oxyde de graphène en utilisant du graphite ; et
chauffer l'oxyde de graphène sous l'atmosphère d'ammoniac à une température de 500° à 800 °C avec une vitesse de 10 °C/min, puis maintenir la température pendant 2 heures, refroidir jusqu'à une température ambiante pour obtenir l'oxyde de graphène dopé à l'azote.
